## Europäisches Patentamt
## European Patent Office
## Office européen des brevets

(11) Veröffentlichungsnummer: **0 263 256**
**B1**

(12) # EUROPÄISCHE PATENTSCHRIFT

(45) Veröffentlichungstag der Patentschrift:
27.06.90

(51) Int. Cl.⁵: **A01B 15/14**

(21) Anmeldenummer: **87111173.8**

(22) Anmeldetag: **03.08.87**

(54) **Verstellmechanik für ein Bodenbearbeitungsgerät.**

(30) Priorität: **08.09.86 NO 863569**

(43) Veröffentlichungstag der Anmeldung:
**13.04.88 Patentblatt 88/15**

(45) Bekanntmachung des Hinweises auf die Patenterteilung:
**27.06.90 Patentblatt 90/26**

(84) Benannte Vertragsstaaten:
**ES FR GB IT SE**

(56) Entgegenhaltungen:
**EP-A- 0 062 734**
**DE-C- 3 345 231**
**DE-U- 7 830 864**
**FR-A- 2 551 305**
**GB-A- 2 122 464**

(73) Patentinhaber: **Kverneland A/S, N-4344 Kvernaland(NO)**

(72) Erfinder: **Nja, Olav, c/o Kverneland A/S,**
**N-4344 Knervaland(NO)**

(74) Vertreter: **König, Reimar, Dr.-Ing. et al, Patentanwälte**
**Dr.-Ing. Reimar König Dipl.-Ing. Klaus Bergen**
**Wilhelm-Tell-Strasse 14 Postfach 260162,**
**D-4000 Düsseldorf 1(DE)**

ACTORUM AG

## Beschreibung

Die Erfindung bezieht sich auf eine Verstellmechanik für einen Pflug mit veränderlicher Arbeitsbreite oder ein ähnliches Bodenbearbeitungsgerät, bei dem ein Pflugrahmen über einen ersten Lenker und einen zweiten Lenker mit einem Pflugvordergestell verbunden ist, eine am Pflugvordergestell gelagerte Stellstange gelenkig mit am Pflugrahmen verschwenkbar gelagerten Pflugkörper-Konsolen verbunden ist und sich ein Stellzylinder zwischen dem Pflugvordergestell und dem Pflugrahmen erstreckt.

Bei einem aus der deutschen Offenlegungsschrift 3 331 534 bekannten mehrscharigen Pflug läßt sich die Arbeitsbreite der einzelnen Pflugschare einstellen und der in Fahrrichtung vorderste Pflug korrekt in bezug auf die Traktormittellinie ausrichten, so daß die von der ersten Pflugschar gezogene Furche denselben Abstand von der benachbarten bereits gezogenen Furche besitzt wie die übrigen Furchen voneinander. Diese Verstellmechanik erfordert jedoch einen zusätzlichen Lenker zwischen dem Pflugvordergestell und der Stellstange zum Ausrichten der einzelnen Pflugschare und ist daher verhältnismäßig kompliziert und aufwendig.

Der Erfindung liegt daher die Aufgabe zugrunde eine Verstellmechanik insbesondere für einen Pflug mit Breitenverstellung zu schaffen, die sich durch eine vereinfachte Konstruktion auszeichnet.

Die Lösung dieser Aufgabe besteht darin, daß bei einem Pflug der eingangs erwähnten Art erfindungsgemäß das vordere Ende der Stellstange im Pflugvordergestell in einer Kulisse geführt ist, wodurch sich ein zusätzlicher Lenker erübrigt.

Die Stellstange kann mit Hilfe einer Rolle in einer gekrümmten Kulisse des Pflugvordergestells geführt sein. Der Anlenkpunkt des zweiten Lenkers am Pflugvordergestell sollte im Schnittpunkt der Mittelsenkrechten zweier Geraden zwischen drei Punkten liegen, die der Lage des an dem Pflugrahmen angebrachten Anlenkpunkt des zweiten Lenkers an der Querkonsole bei der geringsten, der mittleren und der größten Arbeitsbreite entsprechen. Die Krümmung der Kulisse sollte hingegen der Wanderungslinie eines Punkts am vorderen Ende der Stellstange beim Handverstellen des Pflugrahmens von der geringsten zur größten Arbeitsbreite entsprechen.

Die Erfindung wird nachfolgend anhand eines in der Zeichnung dargestellten Ausführungsbeispiels des näheren erläutert. In der Zeichnung zeigen:

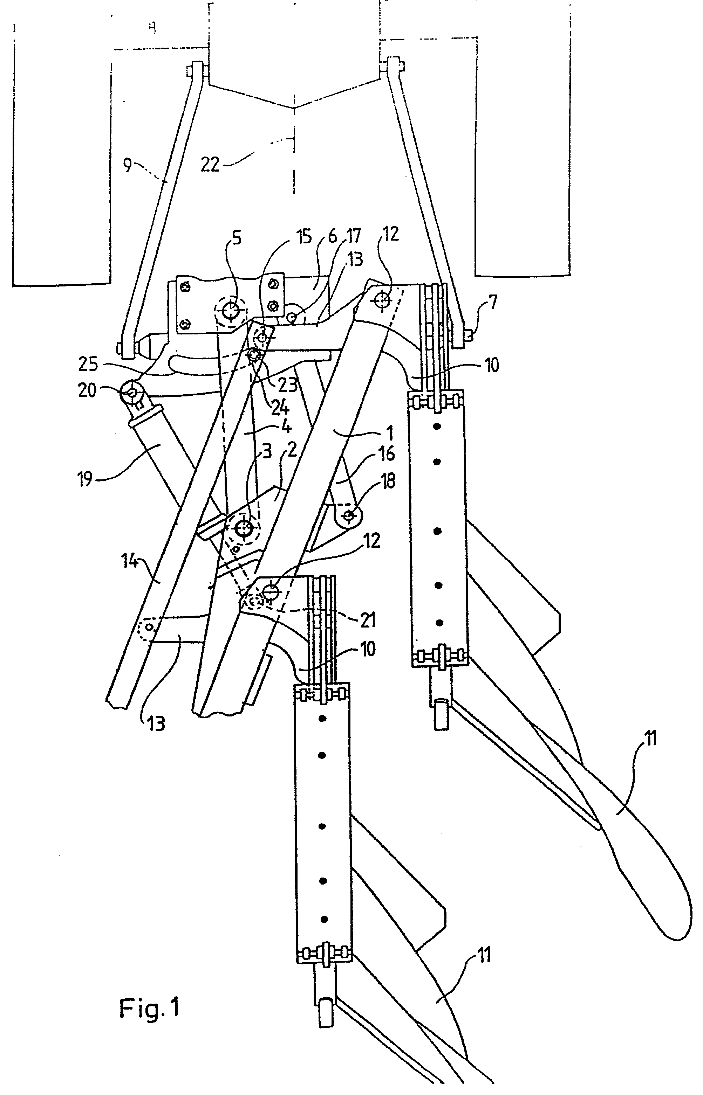

Fig. 1 eine Draufsicht auf den vorderen Teil eines Pflugs mit der erfindungsgemäßen Verstellmechanik bei geringster Arbeitsbreite und

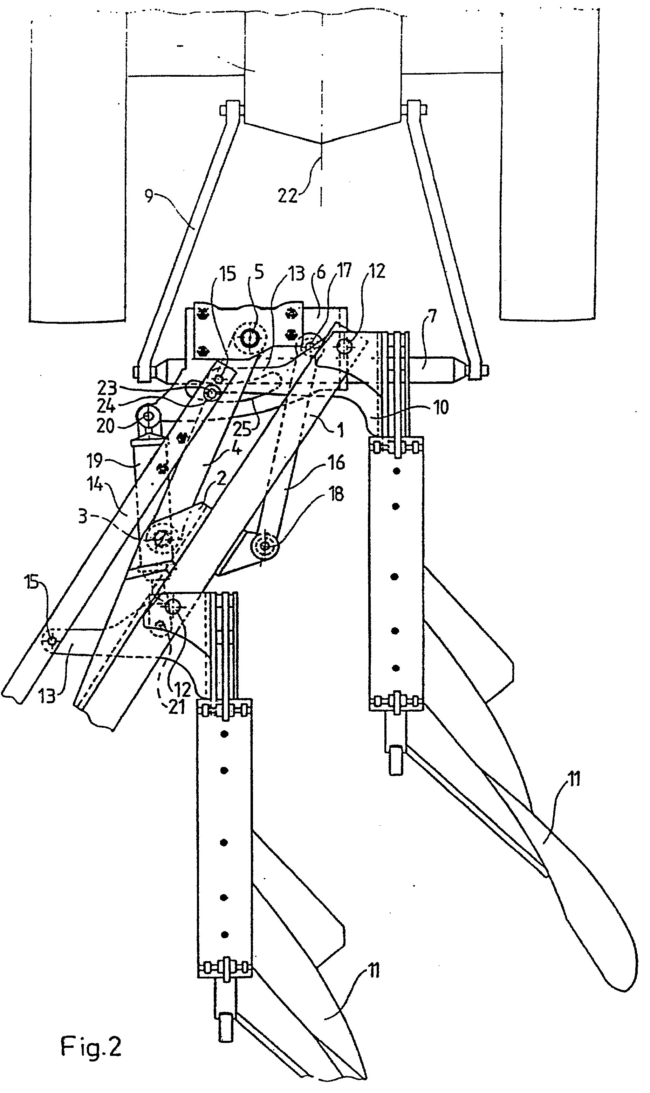

Fig. 2 denselben Teil des Pflugs bei großer Arbeitsbreite.

An einem Pflugrahmen 1 in Gestalt eines Vierkantrohrs ist in einer Querkonsole 2 mit Hilfe eines Bolzens 3 das rückwärtige Ende eines Lenkers 4 verschwenkbar gelagert, dessen vorderes Ende mit Hilfe eines Bolzens 5 verschwenkbar im Pflugvordergestell 6 gelagert ist, durch das sich auch eine Führungswelle 7 zum Befestigen des Pflugs an den Lenkern 9 eines Treckers 8 erstreckt.

Im Pflugrahmen 1 sind mit gleichmäßigem Abstand voneinander mehrere Konsolen 10 für Pflugkörper 11 oder jeweils ein Pflugkörperpaar bei Wendepflügen mit Hilfe von Bolzen 12 verschwenkbar gelagert. Diese Konsolen besitzen Schwenkarme 13, deren freie Enden jeweils mit gleichem Abstand voneinander schwenkbar mit Hilfe von Bolzen 15 mit einer sich parallel zum Pflugrahmen 1 erstreckenden Stellstange 14 verbunden sind. Demgemäß bilden der Pflugrahmen 1, die Schwenkarme 13 der Konsolen 10 und die Stellstange 14 ein Lenkerparallelogramm.

Ein weiterer Lenker 16 ist mit seinem vorderen Ende mit Hilfe eines Bolzens 17 verschwenkbar im Pflugvordergestell gelagert und greift mit seinem anderen bzw. rückwärtigen Ende mit Hilfe eines Bolzens 18 gelenkig an der Querkonsole 2 an. Dabei ist der Lenker 16 so angeordnet, daß ein über Bolzen 20, 21 gelenkig mit dem Pflugvordergestell 6 bzw. mit dem Pflugrahmen 1 verbundener hydraulischer Stellzylinder 19 beim Verstellen des Pflugrahmens gleichzeitig alle Pflugkörperkonsolen 10 lagegerecht zusammen mit der ersten, d.h. dem Pflugvordergestell 6 benachbarten Konsole in bezug auf die Traktormittellinie 22 verstellt.

Die Stellstange 14 ist mit ihrem vorderen Ende am Pflugvordergestell 6 mit Hilfe eines Gelenkzapfens 23 und einer Rolle 24 in einer Kulisse 25 geführt und ändert beim Betätigen des Stellzylinders 19 dementsprechend seine Lage; sie verdreht beim Einstellen des Pflugrahmens bzw. bei einer Änderung der Arbeitsbreite die Konsolen 10 gegenüber dem Pflugrahmen 1 und ihr selbst, so daß die Konsolen stets in gleicher Weise und richtig in bezug auf die Pflügerichtung eingestellt sind. Die notwendige Krümmung der Kulisse 25 ergibt sich aus der jeweiligen Lage des Drehzapfens 23 in bezug auf das Pflugvordergestell 6 beim Verstellen des Pflugs von Hand zwischen der geringsten und seiner größten Arbeitsbreite.

Auf diese Weise folgt die Stellstange 14 der Verschwenkbewegung des Pflugrahmens 1 bei einer Änderung der Arbeitsbreite und nimmt bei jeder Arbeitsbreite die richtige Lage ein.

Aus der zeichnerischen Darstellung ergibt sich, daß die Schwenkzapfen 3, 5, 17, 18 die Eckpunkte eines Vierecks bilden, das bei einer Änderung der Arbeitsbreite ein exaktes Verschwenken der ersten bzw. in Pflügerichtung vordersten Pflugkörperkonsole 10 gewährleistet. Die Beschaffenheit dieses Vierecks ergibt sich in der Weise, daß die Lage dreier Eckpunkte, d.h. die Lage der Schwenkbolzen 3, 5, 18 und die Länge des Lenkers 4 so gewählt werden, daß der Pflug in keiner Lage mit dem Traktor 8 kollidiert. Die Lage des Bolzens 17 in bezug auf das Pflugvordergestell 6 entspricht dann dem Schnittpunkt der Mittelsenkrechten zweier Geraden, die sich zwischen drei Punkten erstrecken, die der Zapfen 18 an der Querkonsole 2 einnimmt, wenn der Pflugkörper 1 manuell in die Stellungen für die geringste, die mittlere und die größte Arbeitsbreite gebracht wird.

## Patentansprüche

1. Verstellmechanik für einen Pflug mit veränderlicher Arbeitsbreite, bei dem ein Pflugrahmen (1) über einen ersten Lenker (4) und einen zweiten Lenker (16) mit einem Pflugvordergestell (6) verbunden ist, eine am Pflugvordergestell (6) gelagerte Stellstange (14) gelenkig mit am Pflugrahmen verschwenkbar gelagerten Pflugkörperkonsolen (10) verbunden ist und sich ein Stellzylinder (19) zwischen dem Pflugvordergestell (6) und dem Pflugrahmen (1) erstreckt, dadurch gekennzeichnet, daß das vordere Ende der Stellstange (14) im Pflugvordergestell (6) in einer Kulisse (25) geführt ist.

2. Mechanik nach Anspruch 1, dadurch gekennzeichnet, daß die Stellstange (14) mit Hilfe einer Rolle (23) in einer gekrümmten Kulisse (25) der Pflugvordergestells (6) geführt ist.

3. Mechanik nach Anspruch 1 oder 2, dadurch gekennzeichnet, daß an der an dem Pflugvordergestell (6) angebrachten Anlenkpunkt (17) des zweiten Lenkers (16) im Schnittpunkt der Mittelsenkrechten zweier Geraden liegt, die sich zwischen drei Punkten erstrecken, die der Lage des an dem Pflugrahmen (1) angebrachten Anlenkpunkts (18) des zweiten Lenkers (16) bei der geringsten, der mittleren und der größten Arbeitsbreite entsprechen.

4. Mechanik nach Anspruch 2 oder 3, dadurch gekennzeichnet, daß die Krümmung der Kulisse (25) der Wanderungslinie eines Punktes (23) am vorderen Ende der Stellstange (14) beim Handverstellen des Pflugrahmens (1) von der geringsten zur größten Arbeitsbreite entspricht.

## Revendications

1. Mécanisme pour ajuster une charrue présentant une largeur de travail variable et comportant un cadre de charrue (1) relié à und châssis avant de charrue (6) via une première bielle (4), une deuxième bielle (16), une tringle de réglagle (14) agencée sur le châssis avant de charrue (6), étant reliée de manière articulée à des supports de soc (10) logés de manière pivotable sur le cadre de charrue, et un vérin de positionnement (19) s'étendant entre le châssis avant de charrue (6) et le cadre de charrue (1), caractérisé en ce que l'extrémité avant de la tringel de réglage (14) est guidée dans une coulisse (25) du châssis avant de charrue (6).

2. Mécanisme selon la revendication 1 caractérisé en ce que la tringle de réglage (14) est guidée à l'aide d'un galet (23) dans une coulisse courbe (25) du châssis avant de charrue (6).

3. Mécanisme selon la revendication 1 ou 2 caractérisé en ce que le point d'articulation (17) de la deuxième bielle (16) du châssis avant de charrue (6) est situé sur le point d'intersection des médiatrices de deux droites qui s'étendent entre trois points qui correspondent à la position du point d'articulation (18) de la deuxième bielle (16) sur le cadre de charrue (1) en position de largeur de travail la plus faible, moyenne et la plus grande.

4. Mécanisme selon la revendication 2 ou 3 caractérisé en ce que la courbure de la coulisse (25) correspond à la trajectoire d'un point (23) de l'extrémité avant de la tringle de réglage (14) lors du réglage manuel du cadre de charrue (1) de la position de largeur de travail la plus faible à la position de largeur de travail la plus grande.

## Claims

1. An adjusting mechanism for a plough with an adjustable working width in which a plough frame (1) is connected to a plough forecarriage (6) by a first link (4) and a second link (16), a control rod (14) mounted on the plough forecarriage (6) is connected in an articulated manner to plough bottom brackets (10) mounted pivotable to the plough frame, and a control cylinder (19) extends between the plough forecarriage (6) and the plough frame (1), characterised in that the front end of the control rod (14) is guided in the plough forecarriage (6) in a slot (25).

2. A mechanism according to claim 1, characterised in that the control rod (14) is guided in a curved slot (25) in the plough forecarriage (6) by means of a roller (23).

3. A mechanism according to claim 1 or claim 2, characterised in that the pivot point (17) of the second link (16) attached to the plough forecarriage (6) lies at the point of intersection of the mid-perpendiculars of two straight lines with extend between three points which correspond to the positions of the pivot point (18) of the second link (16) attached to the plough forecarriage (6) in the case of the smallest, the middle, and the largest working width.

4. A mechanism according to claim 2 or claim 3, characterised in that the curve of the slot (25) corresponds to the locus of a point (23) at the front end of the control rod (14) when the plough frame (1) is manually adjusted from the smallest to the largest working width.

EP 0 263 256 B1

Fig.1

Fig.2